# EUROPEAN PATENT APPLICATION

(11) **EP 4 043 200 A1**
(43) Date of publication of application: **17.08.2022**
(21) Application number: 21157038.7
(22) Date of filing: 15.02.2021
(51) Int. Cl.: B32B 3/08, B32B 3/28, B32B 5/18, B32B 7/02, B32B 7/03, B32B 7/12, B32B 9/02, B32B 9/04, B32B 9/06, B32B 23/04, B32B 23/20, B32B 23/22, B32B 29/00, B32B 29/08, B32B 37/00, B32B 38/00, B65D 81/02

(54) **PROTECTIVE PACKAGING PRODUCT AND METHOD OF MANUFACTURING A PROTECTIVE PACKAGING PRODUCT**

(71) Applicant: Storopack Hans Reichenecker GmbH, 72555 Metzingen (DE)
(72) Inventor: MAHÉ, Anthony, 44860 PONT SAINT MARTIN (FR); CHANFRAY, Emilien, 44240 LA CHAPELLE SUR ERDRE (FR); POISSON, Charles, 49300 CHOLET (FR)
(74) Representative: DREISS Patentanwälte PartG mbB

(57) **Abstract**

A protective packaging product (10) comprises a plurality of stacked layers (12), at least some layers (12) preferably comprising a foamed material, and at least some layers (12) being adhered to an adjacent layer (12). The inventions proposes that at least some layers (12) are made of a polysaccharide material, and that adjacent polysaccharide layers (12) are adhered to each other by means of a polysaccharide bonding material (14).

## Description

The present invention relates to a protective packaging product and a method of manufacturing a protective packaging product according to the preambles of the independent claims.

It is known from the market to manufacture specifically shaped protective packaging products by stacking polyethylene layers one above the other, and by fixing the polyethylene layers to each other by heat welding. Such protective packaging products are used to receive an object in order to protect this object for example against shock loads during transport. Such objects may be TV screens and other fragile objects.

The known protective packaging product has a number of disadvantages. One major disadvantage is that polyethylene is difficult to recycle and is harming the environment when thrown away. Another disadvantage is that manufacturing a layered protective packaging product made of polyethylene needs a lot of energy during the welding process.

It is an object of the present invention to provide a protective packaging product and a method for manufacturing a protective packaging product allowing to avoid the above mentioned disadvantages.

This object is achieved by means of a protective packaging product and a method for manufacturing such a protective packaging product having the features of the independent claims. Further embodiments are given in the dependent claims.

A main advantage of the invention is that the protective packaging product is biodegradable in seawater conditions and in composting conditions, because polysaccharide materials can be home compostable and/or recycled with ordinary recycling procedures. The invention allows to create relatively thick three-dimensionally shaped protective packaging products using only natural polymers, such as polysaccharides. Furthermore, the protective packaging product can be manufactured without having to invest in a specific mold. Moreover, it can be manufactured with very low energy since no welding is necessary. Finally, the specific shape of the protective packaging product adapted to receive an object to be protected is obtained without the need of die cutting at the product, but simply by stacking the specifically shaped layers one above the other, and preferably also side-by-side in order to create a void for receiving at least partially the object to be protected. By consequence, the amount of waste obtained during manufacturing the protective packaging product is considerably reduced.

These advantages are achieved specifically by a protective packaging product comprising a plurality of stacked and prefabricated layers. At least some of the layers within a protective packaging product have different 2D shapes which allows to obtain the final and specific 3D shape of the protective packaging product. This in turn allows to obtain a protective packaging product having undercuts and therefore being particularly well adapted to the object to be protected.

Preferably, at least some layers comprise a foam material, which means that they are soft and thus contribute to the shock absorbing properties of the inventive protective packaging product. In the present context, the term "foam" defines an essentially solid but deformable material comprising a multitude of small gas bubbles separated by thin solid (i.e. non-liquid) walls. Such a foam has a low density which reduces the weight of a final product made from such a material. At least some layers are made of a polysaccharide material, and adjacent polysaccharide layers are adhered to each other by means of a polysaccharide bonding material. The cohesion may be obtained by stacking in quincunx. The term "polysaccharide material" means that the material at least mainly comprises polysaccharides.

These advantages are also achieved by a method for manufacturing a protective packaging product comprising specifically the following steps: a. manufacturing at least some specifically shaped layers of a preferably foam type polysaccharide material; b. assembling the specifically shaped protective packaging product by stacking the specifically shaped layers one above the other and preferably also side-by-side; c. adhering adjacent polysaccharide material layers by means of a polysaccharide bonding material.

In a further embodiment of the protective packaging product, the polysaccharide material comprises at least one material of the following group: cellulose, starch, lignin, pullulanes, alginates, chitin, chitosanes, natural rubbers, rosinic acid, dextrin or proteins such as gluten, zein, casein, collagen, gelatin, phospholipids, caseins and their derivatives such as for example esters or ethers. Cellulose and/or starch are preferred, and particularly preferred is starch both for the layers and the bonding material, because it is easily biodegradable and can easily be foamed.

In a further embodiment of the protective packaging product, the protective packaging product at least partially is shaped by a material separating process, the material separating process being applied to an individual layer prior to adhering it to an adjacent layer. The material separating technology may be dieless cutting, die cutting, hot wire cutting, waterjet cutting, ultrasound cutting, or the like. The material separating process can be executed very fast and with high precision such that individually shaped 2D layers can be obtained, which after being stacked form the 3D protective packaging product.

In a further embodiment of the protective packaging product, at least two of the layers are different in density. This allows to obtain a protective packaging product being specifically adapted to the individual protection requirements. It is to be understood that different densities may not only be applied to layers which are stacked one above the other but also to layers which are arranged side-by-side.

In a further embodiment of the protective packaging product, at least two of the layers have orthotropic properties with an orthotropic axis, the layers preferably being arranged such that the orthotropic axis are parallel, at an angle of 45°, or at an angle of 90°. This provides specifically good global mechanical properties of the protective packaging product. It is to be understood that different orthotropic axis may not only be applied to layers which are stacked one above the other but also to layers which are arranged side-by-side.

In a further embodiment of the protective packaging product, at least one layer having orthotropic properties has a generally corrugated shape. This is a simple and lightweight way to obtain the desired orthotropic properties. Different densities and properties from one layer to another layer may be obtained by varying the "frequency" of the corrugations or undulations, respectively, and/or by varying the thickness.

In a further embodiment of the protective packaging product, it comprises at least one solid insert, preferably made of cellulose, more preferably made of wood. Such an insert has the function of a stiffener which allows to provide the protection function also to heavy weight products. The insert may be a molded insert.

In a further embodiment of the protective packaging product, at least one polysaccharide layer comprises cellulose fibers. Such fibers allow to additionally and specifically design the properties of the protective packaging product to the protection needs. More specifically, cellulose fibers may be used having a length which is lower than 300 µm. This provides for a reduction of the size of the cells in the foam. Furthermore, the fiber component increases the softness of the protective packaging product. Finally, the cellulose fibers allow to recycle the protective packaging product together with normal paper.

In a further embodiment, the protective packaging product comprises at least one paper layer, which provides an additional stiffening effect.

In a further embodiment, the protective packaging product at least partially comprises a solid outer shell, the shell preferably made of a polysaccharide material, more preferably of starch and/or wood. An outer shell protects the foam material from being damaged by the object to be protected by other outer forces for example during transport.

In a further embodiment of the manufacturing method, the polysaccharide bonding material is obtained by dissolving a surface area of at least one polysaccharide material layer. This is a particularly simple way to adhere the layers to one another without the need of additional energy and without the need of a different material, such as a specific chemical glue.

In a further embodiment of the manufacturing method, it comprises shaping at least some of the layers by means of a material separating process prior to the adhering step c. This provides the possibility to realize a specifically and relatively thick three-dimensional product from generally and more or less two-dimensional layers and to realize, by way of example, undercuts. The invention also reduces the amount of waste created by adopting the shape of the protective packaging product to the specific packaging needs.

In a further embodiment of the manufacturing method, the material separating process comprises a cutting, sawing, and/or milling process. These material separating processes are simple and can be realized for example by a CNC-machine with high precision. Especially when cutting and/or sawing is applied, the amount of waste for realizing the specific shape is further reduced.

In a further embodiment of the manufacturing method, the assembly step b is executed using a robot, which reduces the manufacturing time of the protective packaging product.

In a further embodiment of the manufacturing method, the manufacturing step a is executed using an extruder. The extruder may be fed with thermoplastic polysaccharide pellets and may be configured to extrude generally flat polysaccharide foam sheets usable to create the polysaccharide layers in the protective packaging product. When such a polysaccharide foam sheet is extruded, the material expands when it leaves the die of the extruder, which may create a corrugating effect on the extruded foam sheet. This effect may be enhanced by using a die having a corrugated shape. The sheets may be cut and laminated together to create large size panels out of which the individuality shaped polysaccharide layers may be obtained.

Embodiments of the invention are now described in further detail with reference to the attached drawing. In the drawing is shown by
- Figure 1: a schematic sectional view of a first embodiment of a protective packaging product;
- Figure 2: a schematic sectional view of a second embodiment of a protective packaging product;
- Figure 3: a schematic sectional view of a third embodiment of a protective packaging product;
- Figures 4-9: schematic views of extruded corrugated foam panels to be used for the protective packaging products of figures 1-3;
- Figure 10: a plain view of a first cutting scheme of a corrugated foam panel;
- Figure 11: a perspective view of a second cutting scheme of a corrugated foam panel;
- Figure 12: an exploded view of the cut layers obtained by means of the second cutting scheme of figure 11;
- Figure 13: a schematic side view of a device for manufacturing a protective packaging product using starch layers;
- Figure 14: a schematic sectional side view of different steps of a manufacturing method for manufacturing an outer shell to be used with the protective packaging products of figures 1-3; and
- Figure 15: a flowchart of a method for manufacturing a protective packaging product.
In the following detailed description functionally equivalent elements and regions are designated with the same reference numerals. Furthermore, for the sake of clarity not in all figures all possible reference numerals are shown.

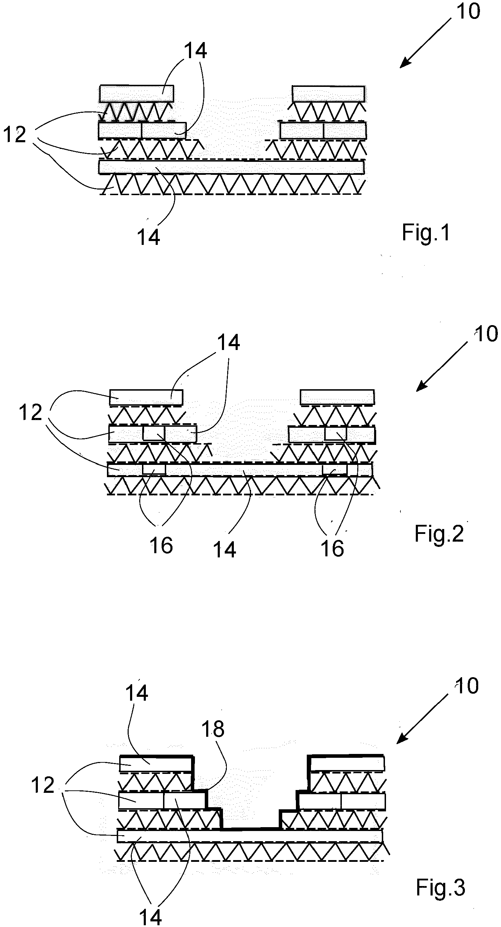

In figure 1 a protective packaging product is designated generally with reference numeral 10. It comprises a plurality of generally flat, corrugated, and stacked layers 12 made of a polysaccharide material, in the present exemplary but preferred embodiment of a starch material. In other non-shown embodiments at least some of the stacked layers may be made of or at least comprise cellulose, lignin, pullulanes, alginates, chitin, chitosanes, natural rubbers, rosinic acid, dextrin or proteins such as gluten, zein, casein, collagen, gelatin, phospholipids, caseins and their derivatives such as for example esters or ethers.

The generally corrugated shape of the layers 12 provides for orthotropic properties of each layer 12. Adjacent starch layers 12 are adhered to each other by means of a polysaccharide bonding material, in the present exemplary but preferred embodiment of a starch bonding material 14. In other non-shown embodiments the bonding material may be made of or at least comprise cellulose, lignin, pullulanes, alginates, chitin, chitosanes, natural rubbers, rosinic acid, dextrin or proteins such as gluten, zein, casein, collagen, gelatin, phospholipids, caseins and their derivatives such as for example esters or ethers.

The starch bonding material 14 may be obtained by dissolving a surface area of a starch material layer 12, for example by applying water. The water may be applied by means of a water spray nozzle (not shown) are another type of application means. The protective packaging product 10 of figure 2 additionally comprises a plurality of solid inserts 16 in the form of wooden battens.

The protective packaging product 10 of figure 3 is similar to the one of figure 1, but it comprises additionally an upper and outer solid shell 18 made of starch. In a non-shown embodiment, the outer solid shell may be made of a material other than starch, for example may be made of wood or at least may comprise wood. The shell 18 may be adhered to the layers 12 by means of a starch bonding material 14 obtained by dissolving a surface area of the starch material layers 12 adjacent to the shell 18 and/or of the surface area of the shell 18 facing to the layers 12. The outer shell 18 may be manufactured as a separate piece which after being manufactured then is assembled with the stacked layers 12. Alternatively, the outer shell 18 may be manufactured by thermocompression of an outer surface area of the assembly of the stacked layers 12, that is by applying pressure and heat to said outer surface area.

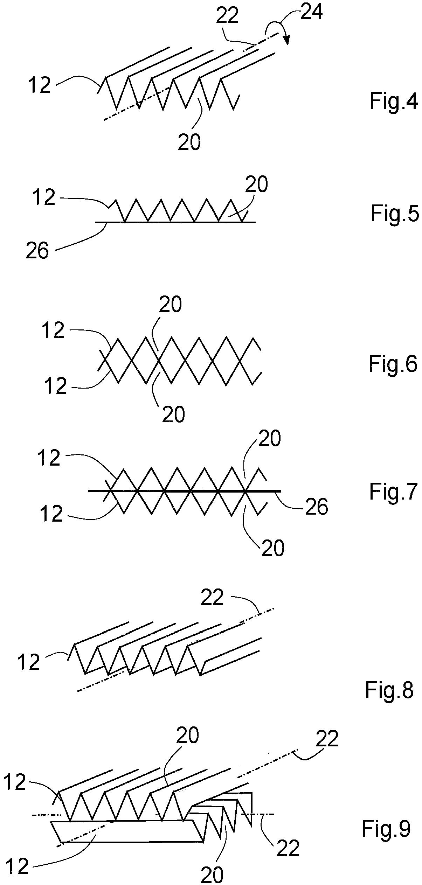

Figures 4 and 8 represent a single corrugated layer 12. As can be seen, the corrugated shape is obtained by V-shape undulations 20. As mentioned above, the corrugated shape provides for an orthotropic property with an orthotropic axis 22. The stiffness against bending is considerably lower about this orthotropic axis 22 (arrow 24 in figure 4) than about an axis which is arranged orthogonally to the orthotropic axis 22. However, as will be readily understood by the skilled person, any other shape of undulation may be possible, such as half-circular or the like. Furthermore, it is to be noted that the protective packaging products 10 of figures 1-3 also may be obtained using layers 12 which do not have any undulation. Furthermore, it is to be understood that non-shown protective packaging products may be obtained using stacked layers having different types, shapes, and frequencies of undulations or having layers with undulations and layers without undulations.

Figure 5 represents an example of a single corrugated layer 12 adhered to a paper layer 26. Again, the adhesion between the tops of the undulations 20 of the corrugated layer 12 and the paper layer 26 can be provided by means of a starch bonding material (not-shown) which again can be obtained by dissolving a surface area of the tops of the undulations 20 of the corrugated layer 12 for example by applying water.

Figure 6 represents an example of two stacked corrugated layers 12 adhered to each other at the tops of the undulations 20 facing to each other. By doing so, the orthotropic axis (not-shown in figure 6) of both layers 12 are parallel to each other. Again, the adhesion between the tops of the undulations 20 facing to each other can be provided by means of a starch bonding material (not-shown) which again can be obtained by dissolving a surface area of the tops of the undulations 20 of at least one of the corrugated layers 12 for example by applying water.

Figure 7 represents an example of two stacked corrugated layers 12 having a paper layer 22 sandwiched between them. Again, the adhesion between the tops of the undulations 20 of both layers 12 and the paper layer 22 can be provided by means of a starch bonding material (not-shown) which again can be obtained by dissolving a surface area of the tops of the undulations 20 of both corrugated layers 12 for example by applying water.

Figure 9 represents an example of two stacked corrugated layers 12. Other than in figure 6, the layers 12 are oriented relative to each other such that the orthotropic axis 22 are arranged orthogonally to each other. In a non-shown embodiment, the orthotropic axis may be arranged parallel to each other or may be arranged in an angle of 45° to each other.

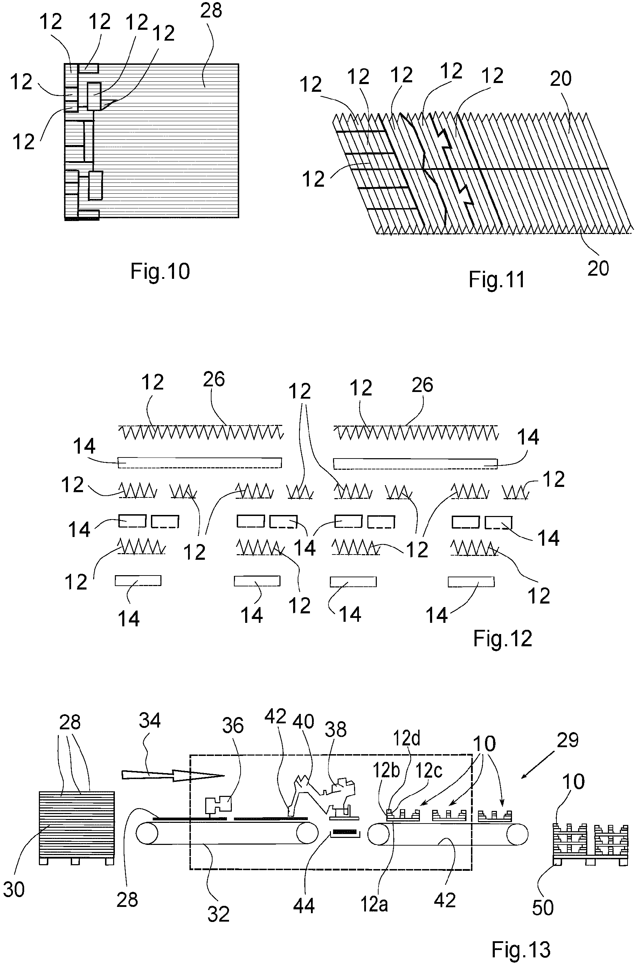

The layers 12 of the protective packaging product 10 are obtained by cutting them out of a large panel which is manufactured by extrusion. Figure 10 represents a first embodiment of such a large panel 28, into which a cutting scheme is drawn which may be used in order to obtain specifically shaped layers 12. These specifically shaped layers 12 thereafter will be used to be stacked one upon the other and also side-by-side in order to obtain a specific protective packaging product 10. It is to be noted that for the sake of clarity in figure 10 only some of the layers 12 are designated with a reference numeral.

As has been mentioned, the layers 12 and the specific shapes are obtained by cutting, for example by means of water jet cutting or laser cutting. In an alternative embodiment, the layers 12 and the specific shapes may be obtained by sawing or by milling. Common to each of these methods is that they are so-called "material separating processes", since the layers 12 are obtained out of the panel 28 by separating one region of the panel 28 from another region of the panel 28.

Figure 11 represents a second embodiment of a large panel 28 into which another cutting scheme is drawn which may be used in order to obtain specifically shaped layers 12, which thereafter will be stacked upon each other and also side-by-side in order to obtain the protective packaging product 10.

Figure 12 is an exploded side view of the specifically shaped generally two-dimensional layers 12 obtained when applying the cutting scheme of figure 11 to the large panel 28 of figure 11. When the layers 12 of figure 12 are stacked and adhered to each other by means of starch bonding material 14, a W-shaped protective packaging product 10 will be obtained, as will be explained hereinafter with reference to figure 13.

Figure 13 represents a schematic side view of an automatic machine 29 for manufacturing a protective packaging product 10. On the very left side of figure 13, a stack 30 of large panels 28 made of expanded polysaccharide material, namely in the present exemplary embodiment starch material is shown. A panel 28 is transported from the stack 30 onto a conveyor 32 by a non-shown transport means, for example a robot. The conveyor 32 transports the panel 28 in a conveying direction 34 to a material separating device 36, for example a waterjet or laser cutter or hot wire cutter or an ultrasonic cutter, the material separating device 36 preferably using CNC technology. The material separating device 36 cuts the large panel 28 according to a preset cutting scheme, for example the cutting scheme of above figure 11.

It is to be understood that the material separating device 36 as well as all or at least many of the other devices of the machine 29 may be controlled by a control device being part of the machine 29 and comprising at least one microprocessor and storage means on which program code is stored. The control device also may comprise output means, such as a monitor, and input means, such as a keyboard, and may also comprise interface means connected to a cutting scheme optimization means. The cutting scheme optimization means may optimize the arrangement of the cuts in the large panel 28 such that only minimum waste is generated.

Seen in conveying direction 34, after the conveyor 32 a robot 38 is arranged having a robot arm 40 and a handling device 42 at the end of the robot arm 40. Moreover, within the working range of the robot 38 a water humidifying device 44 is arranged, presently in the form of a water basin. Alternatively, the water humidifying device may comprise a water spray nozzle, a sponge or a roll.

Seen again in conveying direction 34, after the robot 38 and the water humidifying device 44 a further conveyor 46 is arranged. In operation, the robot 38 by means of its handling device 48 grasps a specific layer 12 from the cut panel 28 lying on the conveyor 36 in order to arrange it at a predetermined position on the conveyor 46. More specifically, in order to obtain at the end, by way of example, the above mentioned W-shape protective packaging product 10, the robot 38 first grasps a base layer 12a from the cut panel 28 and places it with a predetermined orientation of the orthotropic axis 22 on the conveyor 46. At this moment of time during operation, the conveyor 46 of course is standing still.

Thereafter, the robot 38 grasps another layer 12b from the conveyor 32 out of the large panel 28, immerses its lower surface into the water inside the water humidifying device 44, and then places it at a predetermined position and with a predetermined orientation of the orthotropic axis 22 on the base layer 12a on the conveyor 46. This operation is repeated with other cut layers 12c, 12d, and so on, such that, at the end, a W-shape protective packaging product 10 comprising stacked layers 12 is obtained, as shown in figure 13. When the protective packaging product 10 is completed, the conveyor 46 moves forward by a certain distance in order to provide another free space within the working range of the robot 38 to build up the next protective packaging product 10.

Seen again in conveying direction 34, at the end of the conveyor 46, a pallet 48 is arranged. A non-shown handling means may grasp the finished protective packaging products 10 from the conveyor 46 and place them on the pallet 48, as shown on the right side of figure 13. As can be seen from figure 13, the machine 29 allows a fully automatic manufacturing of specifically shaped three-dimensional protective packaging products 10 out of generally flat, that is two-dimensional corrugated starch layers 12.

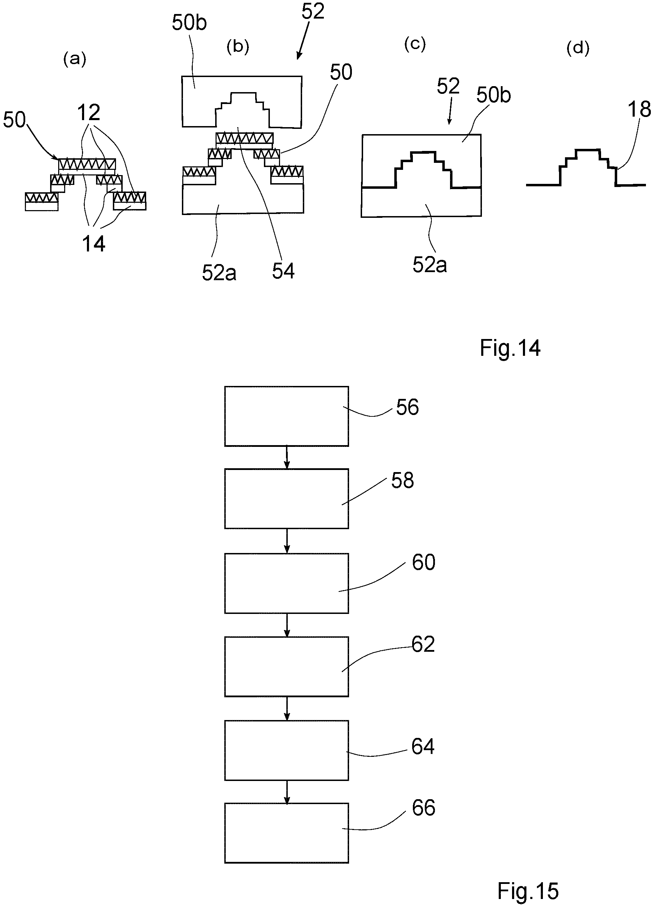

As has been shown above in figure 3, the protective packaging product 10 may comprise an outer solid shell 18 made of starch material. Figure 14 is an exemplary representation of the steps used for manufacturing such an outer shell 18. In a first step, corrugated starch layers 12 are arranged in a specific way complying generally to the desired shape of the shell (step (a)), such that an intermediate product 50 is obtained. As has been explained above, the corrugated starch layers 12 are adhered to each other by means of starch bonding material 14 which may be obtained by humidifying a surface area of a corrugated starch layer 12 facing towards another layer 12.

The intermediate product 50 is then placed into a mold 52 having a lower mold half 52a and an upper mold half 52b (step (b)). A mold cavity 54 is formed between both mold halfs 52a and 52b. This mold cavity 54 complies with the desired shape of the outer solid shell 18. Thereafter, the mold 52 is closed, such that the corrugated starch layers 12 are compressed (step (c)). During compression, also heat is applied to the enclosed starch material 12 inside the mold cavity 64. This process is called "thermocompression". After opening the mold 52, the final outer solid shell 18 is obtained (step (d)). The outer solid shell 18 can be fixed to the other parts of the protective packaging product 10 formed by the corrugated starch layers 12 by means of a starch bonding layer 14, as is shown in figure 3. In an alternative non-shown embodiment, the outer shell is not manufactured by a separate molding process, but directly by applying a thermocompression process on an outer surface area of the layers forming the protective packaging product.

A method of manufacturing the protective packaging product 10 is now explained with reference to figure 15. The method starts in a functional block 56. In a functional block 58 panels 28 of a preferably foamed polysaccharide material, in the present exemplary embodiment starch material, are manufactured, for example by extrusion. In a functional block 60 specifically shaped layers 12 are cut out of the panel 28 by means of a material separating process, such as cutting, sawing or milling.

In a functional block 62, at least at some of the layers 12 a starch bonding material 14 is created by dissolving a surface area of these layers 12. Preferably, dissolving a surface area is realized by applying water. It is to be understood that in other embodiments, where an other polysaccharide material than starch is used for manufacturing the layers, other polysaccharide bonding materials may be used for adhering the layers to each other. This means that the polysaccharide bonding material may be the same material as used for manufacturing the layers, or may be different to the material used for manufacturing the layers.

In a functional block 64, the layers 12 are stacked one above the other and preferably also side-by-side in a predetermined manner, such that a protective packaging product 10 having a desired shape is assembled. The assembly step may be executed by a robot 38. Adjacent starch material layers 12 adhere to each other by means of the starch bonding material 14. The method ends in a functional end block 66.

While not shown in the above embodiments, the protective packaging product may comprise a polysaccharide material layer having a density which is different from the density of another starch material layer of the same protective packaging product. This applies both to layers which are stacked one above the other and to layers which are arranged side-by-side at the same or a different level of layer within the protective packaging product. By way of example, different densities may obtained by using a layer having undulations with a width which is different from the width of the undulations of another layer of the same protective packaging product. Furthermore, different densities may be obtained by using a polysaccharide material layer having a material thickness which is different from the material thickness of another polysaccharide material layer of the same protective packaging product.

Furthermore, while not shown in the above described embodiments, at least one starch layer may comprise cellulose fibers.

Furthermore, while not shown in the above described embodiments, it is generally possible that layers, which are arranged side-by-side within the same protective packaging product, either at the same level or at different levels within the protective packaging product, may have different properties, including being made of different polysaccharide materials, having different orientations of the orthotropic axis, having different densities, and having different thicknesses.

## Claims

1. Protective packaging product (10), comprising a plurality of stacked layers (12), at least some layers (12) preferably comprising a foamed material, and at least some layers (12) being adhered to an adjacent layer (12), **characterized in that** at least some layers (12) are made of a polysaccharide material, and that adjacent polysaccharide layers (12) are adhered to each other by means of a polysaccharide bonding material (14).

2. The protective packaging product (10) of claim 1,
wherein the polysaccharide material comprises at least one material of the following group: cellulose, starch, lignin, pullulanes, alginates, chitin, chitosanes, natural rubbers, rosinic acid, dextrin or proteins such as gluten, zein, casein, collagen, gelatin, phospholipids, caseins and their derivatives such as for example esters or ethers.

3. The protective packaging product (10) of at least one of the preceding claims, wherein the protective packaging product (10) at least partially is shaped by a material separating process, the material separating process being applied to an individual layer (12) prior to adhering it to an adjacent layer (12).

4. The protective packaging product (10) of at least one of the preceding claims, wherein at least two of the layers (12) are different in density.

5. The protective packaging product (10) of at least one of the preceding claims, wherein at least two of the layers (12) have orthotropic properties with an orthotropic axis (22), the layers (12) preferably being arranged such that the orthotropic axis (22) are parallel, at an angle of 45°, or at an angle of 90°.

6. The protective packaging product (10) of claim 5,
wherein at least one layer (12) having orthotropic properties has a generally corrugated shape.

7. The protective packaging product (10) of at least one of the preceding claims, wherein it comprises at least one solid insert (16), preferably made of cellulose, more preferably made of wood.

8. The protective packaging product (10) of at least one of the preceding claims, wherein at least one polysaccharide layer (12) comprises cellulose fibers.

9. The protective packaging product (10) of at least one the preceding claims, wherein it comprises at least one paper layer (26).

10. The protective packaging product (10) of at least one of the preceding claims, wherein it at least partially comprises a solid outer shell (18), the shell (18) preferably made of a polysaccharide material, more preferably of starch and/or cellulose.

11. Method of manufacturing a protective packaging product (10) comprising a plurality of stacked layers (12), **characterized in that** it comprises the following steps:
a. manufacturing at least some layers (12) of a polysaccharide material;
b. assembling the protective packaging product (10) by stacking the layers (12) one above the other;
c. adhering adjacent polysaccharide material layers (12) by means of a polysaccharide bonding material (14).

12. The method of claim 11, wherein the polysaccharide bonding material (14) is obtained by dissolving a surface area of at least one polysaccharide material layer (12).

13. The method of at least one of claims 11-12, wherein it comprises shaping at least some of the layers (12) by means of a material separating process prior to the adhering step c.

14. The method of claim 13, wherein the material separating process comprises a cutting, sawing, and/or milling process.

15. The method of at least one of claims 11-14, wherein the assembly step b is executed using a robot (38).

16. The method of at least one of claims 11-15, wherein the manufacturing step a is executed using an extruder.
